(19) **Europäisches Patentamt**

**European Patent Office**

**Office européen des brevets**

(11) **EP 1 158 415 B1**

(12) **EUROPEAN PATENT SPECIFICATION**

(45) Date of publication and mention
of the grant of the patent:
**22.12.2004 Bulletin 2004/52**

(51) Int Cl.7: **G06F 13/42**

(21) Application number: **01000187.3**

(22) Date of filing: **25.05.2001**

(54) **Parallel data interface**

Parallele Datenschnittstelle

Interface de données parallèles

(84) Designated Contracting States:
**DE FR GB**

(30) Priority: **25.05.2000 GB 0012813**

(43) Date of publication of application:
**28.11.2001 Bulletin 2001/48**

(73) Proprietor: **Texas Instruments Inc.**
**Dallas, Texas 75251 (US)**

(72) Inventor: **Pickering, Andy**
**Rugby, Warwickshire CV22 5BJ (GB)**

(74) Representative: **Holt, Michael**
**Texas Instruments Ltd.,**
**EPD MS/13,**
**800 Pavilion Drive**
**Northampton Business Park,**
**Northampton NN4 7YL (GB)**

(56) References cited:
**WO-A-99/05608**      **DE-A- 4 025 004**
**US-A- 5 164 677**

Printed by Jouve, 75001 PARIS (FR)

**Description**

The present invention relates to an interface or other apparatus for receiving parallel transmitted data streams.

There are generally two well recognised ways in which data is transmitted. In serial data transmission the data is transmitted sequentially via a single transmission channel. In parallel transmission a plurality of associated channels are provided and data is transmitted simultaneously via the plurality of channels.

In any data transmission system, the data is generally transmitted in a fixed relationship to a clock signal. That is, a clock signal defines fixed time slots and one data bit is transmitted in each time slot. Upon reception of the transmitted signal the relationship of the received signal to the data time slots must be established to enable recovery of the transmitted data. Because of variations introduced by the transmission medium it is not possible simply to run a clock having an appropriate frequency at the receiver without ensuring that it is properly synchronised with the incoming data.

In serial transmission systems a suitably synchronised clock at the receive apparatus may be generated from the received data itself, or the data sequence may be used to synchronise a locally generated clock to enable data recovery. Using such arrangements, high data transmission rates have been achieved using serial data transmission technique.

Parallel data transmission presents other problems in terms of data recovery. In particular the transmission characteristics of each of the plurality of parallel channels are not always identical. Some variation may be introduced by the physical construction (e. g. cable lengths) of the transmission paths and these can be minimised by appropriate design. Other factors include interference in the path and it happens that such environmental factors affect some channels differently to others. One effect of these different characteristics in the various channels is that the transmission time from transmission to reception may not be identical for all channels. Thus, at the receive apparatus there may be some departure from proper synchronisation between the channels and this is known as Askew@.

Typically, one channel in a parallel system may be used to transmit a clock signal which can be used for the data recovery at the receiver, and the skew also affects the timing relationship between the clock channel and the data channels.

It is possible to avoid errors caused by skew in a parallel transmission system between the data channels and the clock channel by taking steps such as limiting the transmission distance and the data rate in each channel. This has the effect that the magnitude of the skew introduced is small compared to the data clock intervals, so that it does not interfere with the data recovery.

However, as bandwidth requirements in data transmission systems increase there is demand for the ability to transmit parallel data at data rates in each channel approaching those previously used for serial transmission. At such data rates the problems caused by skew in the parallel transmission channel have a significant effect in the ability to recover received data.

One approach would be to regenerate a separate data recovery clock for each of the parallel channels. This is however impractical for a large number of parallel data channels, and also does not deal with the lack of synchronisation between the data channels.

The international application WO99/05608 suggests to transmit a start delimiter on each of the data signals allowing to detect the approximate bit center of the data signals on the receiver side. These center samples correspond to the de-skewed data signals, synchronized with the local clock.

The present invention provides apparatus for receiving parallel transmitted data in a plurality of channels comprising means to generate a clock signal on the basis of the received data and means associated with each of said channels to synchronise data received on the associated channel with the generated clock.

In this arrangement a single clock signal is generated which is used for all the data channels. This means that the apparatus is easily scaleable to receive data from large numbers of parallel channels.

In synchronising all the data channels with a single clock the apparatus also removes the skew between the data channels. Thus the apparatus can simply present as-received but re-aligned data signals for subsequent processing. Alternatively the apparatus can perform the data recovery at the same time as re-aligning the channels.

The clock signal may be generated on the basis of a single received channel. That channel may be a channel designated for the transmission of a clock signal from the transmitter. Alternatively, that channel may be one of the data channels in which it is expected that there will be a significant number of data transitions.

It may also be possible to generate the clock signal on the basis of a plurality of the parallel channels.

The synchronising of each data channel with the clock is preferably done by applying a variable delay to each of the data channels. Also, the generated clock signal is preferably delayed by half the maximum delay available to each data channel so that the data channels can be effectively advanced or retarded in relation to the clock.

The problems overcome by the invention together with other features and advantages will be more fully explained in the following description of a preferred embodiment, given by way of non-limiting example, and with reference to the accompanying drawings, in which:

Figure 1 shows ideal clock and data signals;
Figure 2 shows clock and data signals with skew;
Figure 3 shows an outline of high-speed parallel interface;

Figure 4 illustrates example phase detector with idealised signal waveforms;

Figure 5 shows a phase detector characteristic;

Figure 6 shows a phase detector characteristic with data delay adjustment range for ideally aligned data;

Figure 7 shows a phase detector characteristic with data delay adjustment range for mis-aligned data;

Figure 8 shows a phase detector characteristic with high skew and large Td;

Figure 9 shows a phase detector characteristic with high skew and large Td with delay Awrap around@;

Figure 10 illustrates a variable data delay line based on interpolator; and

Figure 11 illustrates an extended data phase interpolator delay line for improved linearity/range.

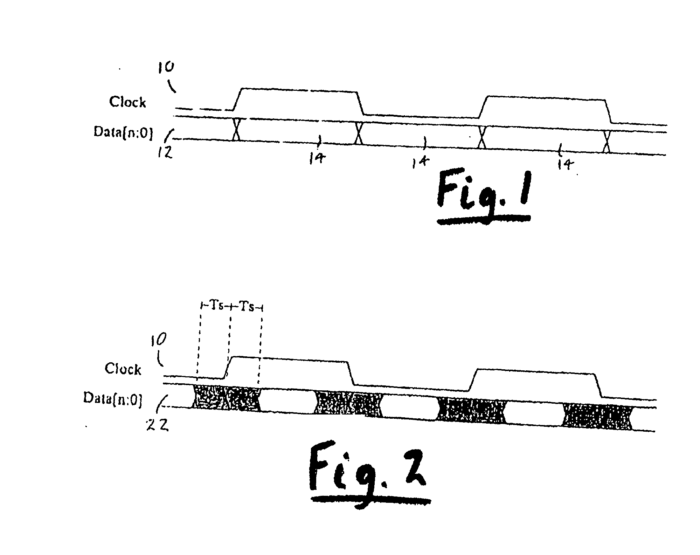

Figure 1 illustrates data signal timing in a typical data transmission system. In particular Figure 1 shows a clock signal 10, known as a half-rate clock, and data slots are defined between clock transitions. This is shown by the representative data stream 12 with sequential data slots 14. In the preferred embodiment it will be assumed that a half-rate clock is transmitted in one of the parallel channels. For data recovery it is usual to re-generate a full-rate clock having a frequency twice that of the half-rate clock which therefore has transitions in the centres of each data slot 14 as well as at the boundaries.

Figure 2 is a diagram similar to Figure 1 but illustrating the effect of skew in the transmission channel. As compared to half-rate clock 10 it can be seen that the boundaries between the data slots in data stream 22 can drift from synchronisation with the clock transitions as a result of variations in the transmission times in the carious channels.

More precisely, skew is specified by a single time value representing the maximum alignment error between any two signals in the parallel transmitted signals. This is defined as Ts and, at worst therefore, any data bit could be shifted early or late with respect to the clock by up to Ts. This receiver needs to be designed to handle such mis-alignment.

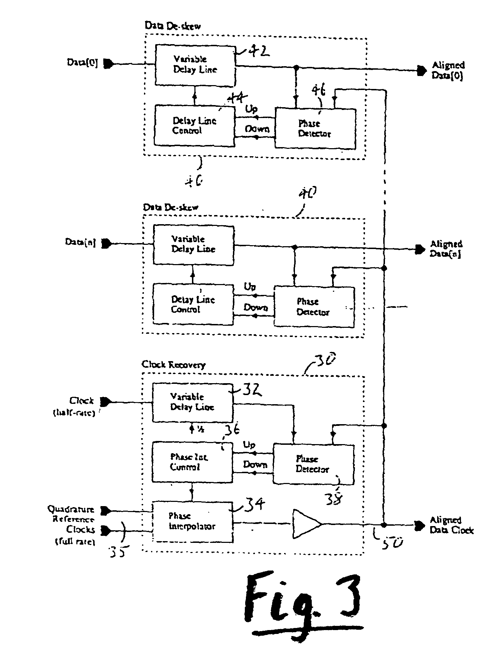

An outline of the preferred parallel interface receiver system is shown in Figure 3. This comprises a Clock Recovery circuit 30 and a set of Data De-skew circuits 40, one for each bit in the parallel bus. The basic principle of the system is to generate a recovered clock from the Clock input and to distribute this to each of the de-skewing circuits where each of the incoming data signals is shifted into alignment with the clock using a variable delay line.

The operation of the De-skew circuits 40 will be described in more detail below, but it may be noted that each such circuit comprises a variable delay 42 which is arranged to apply a variable delay between O and Td to the received data, The delay 42 is controlled by a delay line control means 44 which operates on the basis of a comparison between the delayed data and the clock signal effect by phase detector 46.

A delay line 32 is also used in the clock recovery circuit 30, where it is set to give a delay exactly in the middle of its range: ie the delay line in the clock recovery block is set to 2Td. This allows the data to be shifted with respect to the clock by ?2Td in the data de-skewing blocks 40.

The clock recovery system shown is based on a phase interpolation technique wherein an output clock phase is generated from a pair of quadrature reference clocks 35 by summing these with different weightings in a phase interpolator 34. In Figure 3, the reference clocks (and hence the aligned data clock) will nominally be at the full data rate. However, it is possible to adapt the system to operate on a half-rate clock. Control of the phase interpolator 34 is performed using a phase detector 38 to compare the alignment of the recovered clock 50 with the delayed half-rate clock. This then produces control signals which are used to adjust the phase interpolator weightings. The phase interpolator control 36 is generally carried out using digital techniques, although the analogue method described in GB patent application number 0004298.6 may also be used.

The recovered clock 50 is distributed to each of the data channels. In practice, care needs to be taken to ensure that this clock distribution does not itself exhibit skew. The data de-skewing circuits 40 then use phase detectors 46 which may be identical to that in the clock recovery block 30 to control the variable delay lines 42 so as to shift the data into alignment with the recovered clock 50.

The delay lines allow the data to be shifted in position with respect to the clock by ?2Td, therefore in order to ensure that the skew can be cancelled out at each input it must be ensured that 2Td > Ts.

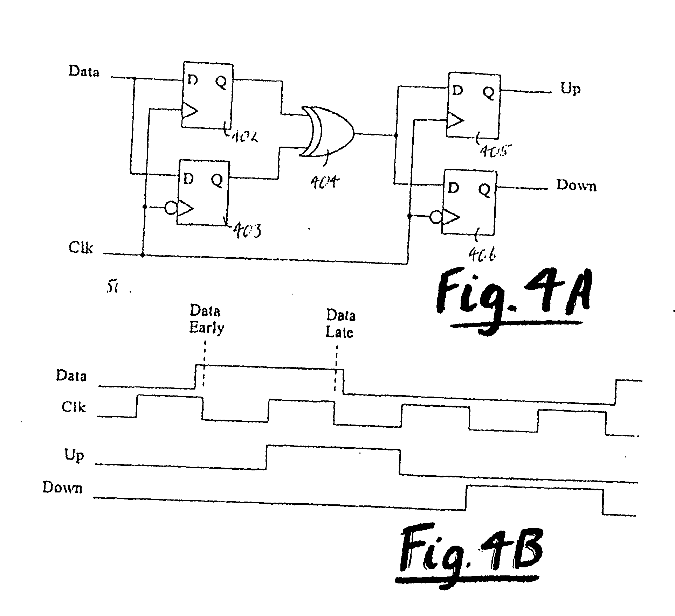

The precise implementation of the phase detector 38,46 is not a part of this invention. However, in general this will simply provide an indication to either increase the delay (via the AUp@ control signal) or decrease the delay (via the ADown@ control signal) if the data is early or late respectively. A simple example of a possible phase detector circuit 46 is shown in Figure 4A. This circuit simply samples the received data on the positive and negative edges of the clock 50 by way of latches 402,403. Exclusive-OR function 404 detects changes in the data value: if the change occurs between a positive clock edge and the ensuing negative edge it is considered early and an AUp@ pulse is generated by latch 405, whilst if the change occurs between a negative clock edge and the ensuing positive edge it is considered late and a ADown@ pulse is generated by latch 406. In this way, the data edges are brought into alignment with the negative clock edges, and therefore the positive clock edge of the full-rate clock is centred in the data eye to optimally sample the data bit values. This timing is illustrated in Figure 4B.

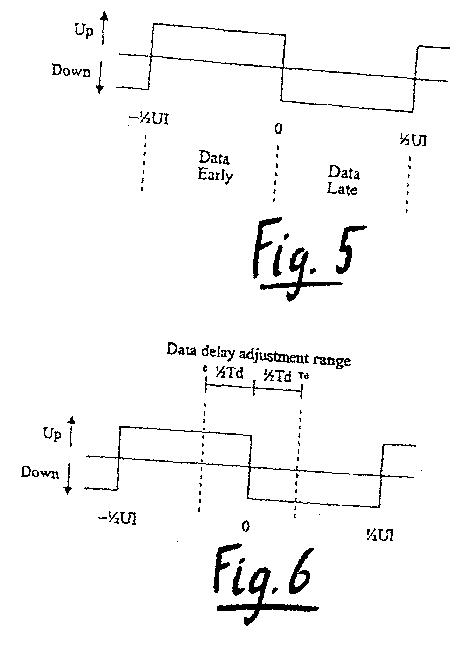

This phase detector behaviour can be described by the characteristic shown in Figure 5. Note that this characteristic exhibits a periodicity bounded by ?2UI, where UI is a Aunit interval@ which is equivalent to the period of a single data bit. This is a necessary characteristic of a data phase detector.

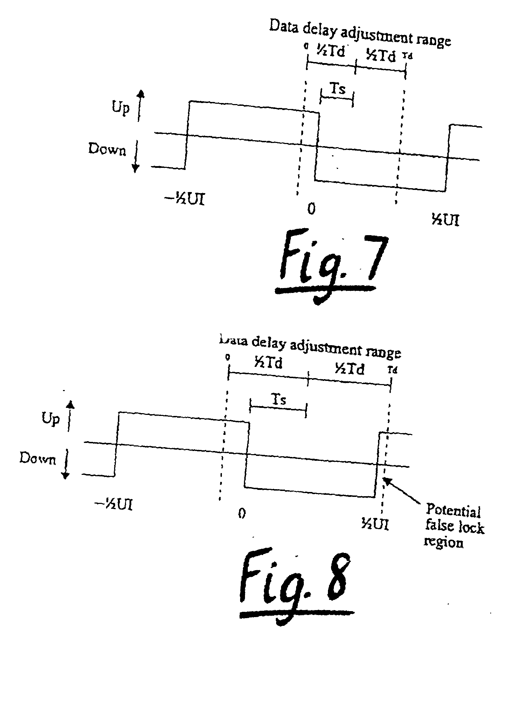

In the de-skewing circuits 40, the phase detector 46 is used to control the data input delay line to adjust its phase with respect to the aligned data clock 50. Figure 6 shows the adjustment range (?2Td) of the data signal for an ideally aligned input superimposed onto the phase detector characteristic. Figure 7 shows a similar diagram for mis-aligned data: in this case, the data is late and the phase detector will indicate that the delay needs to be reduced. This diagram illustrates the earlier stated condition; that in order to re-centre the data, 2Td > Ts.

Figure 8 shows a similar diagram to Figure 7, but with a higher value of skew and a correspondingly increased data delay adjustment range. Under these conditions, it is possible to adjust the phase of the data such that it overlaps into the adjacent bit period. If the system were to get into this state, the phase detector 46 would indicate the wrong direction to centre the data (e. g in Figure 8, the phase detector would try to increase the delay rather than reduce it) and would potentially lock up at the end stop of the delay line range. It can be seen that the condition for this to occur is that Ts + 2Td > 2UI.

The range for Td to meet these requirements is therefore as follows:-

$$Ts < 2Td < (2UI - Ts)$$

These constraints could prove a serious limit to the practicality of this system in reality, since Td will be subject to variation due to manufacturing tolerances, whilst any increase in Ts results in a decrease in the tolerable range of Td for both its minimum and maximum values. For instance, if Ts = 3UI, Td has zero margin for error.

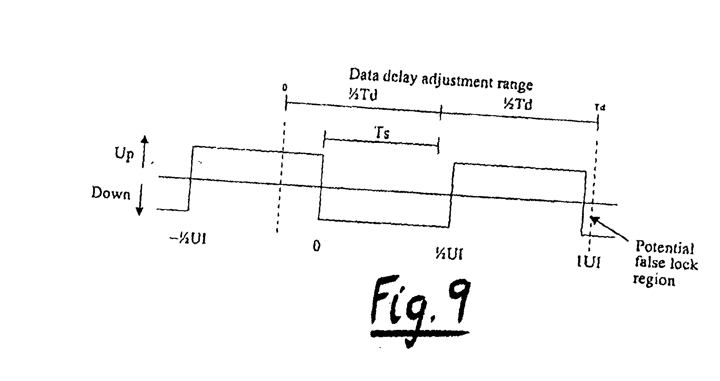

In order to alleviate these constraints, it is desirable to avert the potential lock-up condition. In fact it is possible to do this by allowing the delay line control to Awrap around@ from its maximum value to its minimum value and vice versa. If this is implemented, no potential lock-up will occur unless the skew and data delay are sufficient for it to lock onto the centre of the adjacent data bit as shown in Figure 9. This will only occur if Ts + 2Td > 2UI. Thus our restrictions for Td are now as follows:

$$Ts < 2Td < (UI - Ts)$$

which gives considerably more margin than the previous case.

Note that the requirement to allow wrap around of the data delay lines will probably mandate a digital solution to control these.

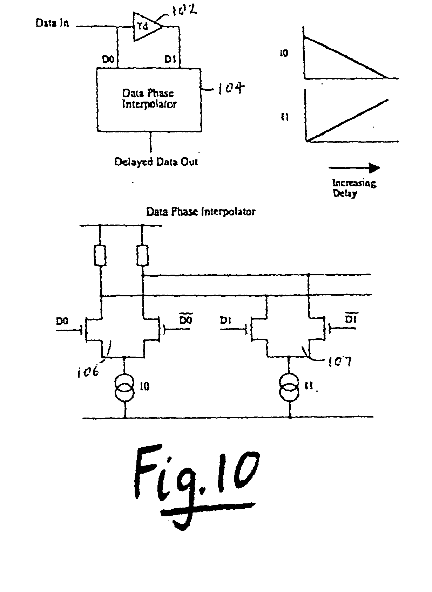

Although there are various standard ways to implement the variable delay line, one preferred implementation is shown in Figure 10 and makes use of a fixed delay element 102 in conjunction with a variable interpolator 104. Phase interpolator 104 mixes the non-delayed signal D0 in variable proportions with maximally delayed signal D1 to output a variable delay signal. This may be implemented as illustrated by a pair of transistor pairs 106, 107 to which differential representations of D0 and D1 are applied and mixed in variable proportions according to the values of current sources I0, I1. In this scheme, the bias currents I0 and I1 are varied in opposition so that the total current is constant.

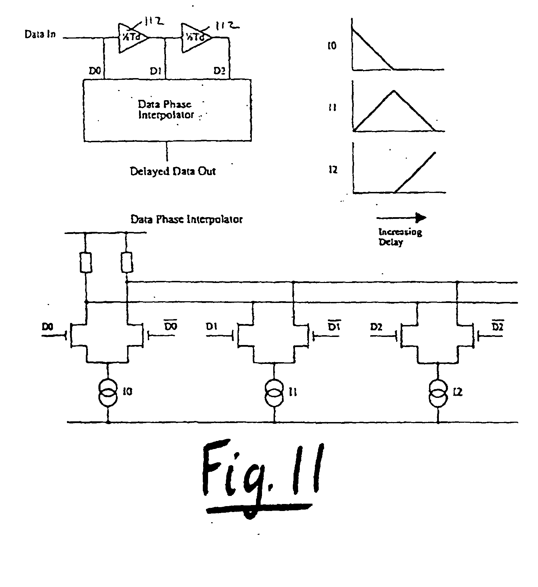

The design in Figure 10 provides good performance providing that Td is relatively small compared with the data bit period. For higher values of Td, the circuit of Figure 11 may be used, which provides a number of delay stages 112 rather than a single slow stage (which will tend to attenuate the high speed data signal components) . These could then be used in conjunction with a multi-stage interpolator akin to that shown in Figure 10. The delay line could be further extended with a larger number of stages if required. This would tend to both improve linearity of the data phase interpolator and allow a larger delay variation.

## Claims

1. Apparatus for receiving parallel transmitted data via plurality of channels comprising:

   means (30) for generating a clock signal (50) on the basis of the received data; and
   means (40) associated with each of said channels for synchronising data received on the associated channel with the generated clock signal (50).

2. Apparatus as claimed in claim 1, wherein the means (30) for generating a clock signal includes clock signal delay means (32) for delaying the clock signal (50) by a predetermined amount with respect to a clock input derived from the received data.

3. Apparatus as claimed in claim 2, wherein the predetermined amount is half a maximum delay (Td) available to each data channel.

4. Apparatus as claimed in any preceding claim, wherein the synchronising means (40) each include variable delay means (42) for applying a variable delay to each of the channels.

5. Apparatus as claimed in claim 4, wherein each variable delay means (42) is incremented over a range of available delays (0-Td) and is controlled to revert to its maximum delay in the event that the maximum delay (Td) is insufficient to achieve synchronisation, or to its maximum delay (Td) if its maximum delay is insufficient to achieve synchronisation.

6. Apparatus as claimed in claim 4 or claim 5, wherein the variable delay means (42) include means (104) for mixing a non-delayed signal with a maximally delayed signal in variable proportions to output a variable delay signal.

7. Apparatus as claimed in claim 6, wherein said mixing means includes a plurality of delay stages (112).

8. A method of synchronising data signals received via a plurality of channels which method comprising:

generating a clock signal (50) on the basis of received data; and
synchronising data received on each channel with the generated clock signal (50).

9. A method as claimed in claim 8, wherein the clock signal (50) is delayed by a predetermined amount with respect to a clock input derived from said received data.

10. A method as claimed on claim 9, wherein said predetermined amount is half maximum delay (Td) available to each data channel.

11. A method as claimed in any of claims 8 to 10, wherein a variable delay on each of the channels is incremented over a range of available delays (0-Td) and wherein the delay is controlled to revert to its minimum in the event that the maximum delay is insufficient to achieve synchronisation and vice versa.

**Patentansprüche**

1. Vorrichtung zum Empfangen paralleler gesendeter Daten über mehrere Kanäle, die umfasst:

Mittel (30) zum Erzeugen eines Taktsignals (50) auf der Grundlage der empfangenen Daten; und

Mittel (40), die jedem der Kanäle zugeordnet sind, um Daten, die auf dem zugeordneten Kanal empfangen werden, mit dem erzeugten Taktsignal (50) zu synchronisieren.

2. Vorrichtung nach Anspruch 1, bei der die Mittel (30) zum Erzeugen eines Taktsignals Taktsignal-Verzögerungsmittel (32) aufweisen, die das Taktsignal (50) in Bezug auf ein Takteingangssignal, das aus den empfangenen Daten abgeleitet wird, um einen vorgegebenen Betrag verzögern.

3. Vorrichtung nach Anspruch 2, bei der der vorgegebene Betrag die Hälfte einer maximalen Verzögerung (Td), die für jeden Datenkanal verfügbar ist, ist.

4. Vorrichtung nach einem vorhergehenden Anspruch, bei der die Synchronisationsmittel (40) jeweils Mittel (42) für variable Verzögerung aufweisen, die an jeden der Kanäle eine variable Verzögerung anlegen.

5. Vorrichtung nach Anspruch 4, bei der jedes der Mittel (42) für variable Verzögerung über einen Bereich verfügbarer Verzögerungen (0-Td) inkrementiert und so gesteuert wird, dass es auf seine maximale Verzögerung zurückgesetzt wird, falls die maximale Verzögerung (Td) nicht ausreicht, um eine Synchronisation zu erzielen, oder auf seine maximale Verzögerung (Td) zurückgesetzt wird, falls seine maximale Verzögerung nicht ausreicht, um eine Synchronisation zu erzielen.

6. Vorrichtung nach Anspruch 4 oder Anspruch 5, bei der die Mittel (42) für variable Verzögerung Mittel (104) aufweisen, die ein nicht verzögertes Signal mit einem maximal verzögerten Signal in variablen Verhältnissen mischen, um ein Signal mit variabler Verzögerung auszugeben.

7. Vorrichtung nach Anspruch 6, bei der die Mischungsmittel mehrere Verzögerungsstufen (112) aufweisen.

8. Verfahren zum Synchronisieren von Datensignalen, die über mehrere Kanäle empfangen werden, wobei das Verfahren umfasst:

Erzeugen eines Taktsignals (50) auf der Grundlage empfangener Daten; und

Synchronisieren von auf jedem Kanal empfangenen Daten mit dem erzeugten Taktsignal (50).

9. Verfahren nach Anspruch 8, bei dem das Taktsignal (50) in Bezug auf ein Takteingangssignal, das aus den empfangenen Daten abgeleitet wird, um einen vorgegebenen Betrag verzögert wird.

10. Verfahren nach Anspruch 9, bei dem der vorgegebene Betrag die halbe maximale Verzögerung (Td), die für jeden Datenkanal verfügbar ist, ist.

11. Verfahren nach einem der Ansprüche 8 bis 10, bei dem eine variable Verzögerung auf jedem der Kanäle über einen Bereich verfügbarer Verzögerungen (0-Td) inkrementiert wird und bei dem die Verzögerung so gesteuert wird, dass sie auf ihr Minimum zurückgesetzt wird, falls die maximale Verzögerung nicht ausreicht, eine Synchronisation zu erzielen, und umgekehrt.

**Revendications**

1. Appareil pour recevoir des données transmises en parallèle par le biais de plusieurs canaux, comprenant :

    - un moyen (30) permettant de générer un signal d'horloge (50) en fonction des données reçues ; et
    - des moyens (40) associés à chacun desdits canaux afin de synchroniser les données reçues sur un canal associé avec le signal d'horloge généré (50).

2. Appareil, tel que revendiqué dans la revendication 1, dans lequel le moyen (30) permettant de générer un signal d'horloge comprend un moyen de retardement de signal d'horloge (32) permettant de retarder le signal d'horloge (50) dans une quantité prédéterminée par rapport à une entrée d'horloge dérivée des données reçues.

3. Appareil, tel que revendiqué dans la revendication 2, dans lequel la quantité prédéterminée représente la moitié d'un retard maximal (Td) disponible pour chaque canal de données.

4. Appareil, tel que revendiqué dans l'une quelconque des revendications précédentes, dans lequel les moyens de synchronisation (40) comprennent chacun un moyen de retard variable (42) pour appliquer un retard variable à chacun des canaux.

5. Appareil, tel que revendiqué dans la revendication 4, dans lequel chaque moyen de retard variable (42) est incrémenté sur une plage de retards variables (0-Td), et est commandé de manière à revenir à son retard maximal dans le cas où le retard maximal (Td) ne suffit pas pour obtenir la synchronisation, ou à son retard maximal (Td) si son retard maximal est insuffisant pour obtenir la synchronisation.

6. Appareil, tel que revendiqué dans la revendication 4 ou la revendication 5, dans lequel le moyen de retard variable (42) comprend un moyen (104) permettant de mélanger un signal non retardé à un signal retardé au maximum dans des proportions variables de manière à émettre un signal de retard variable.

7. Appareil, tel que revendiqué dans la revendication 6, dans lequel ledit moyen de mélange comprend plusieurs étages de retard (112).

8. Procédé de synchronisation de signaux de données reçus par le biais de plusieurs canaux, lequel procédé consiste à :

    - générer un signal d'horloge (50) en fonction des données reçues ; et
    - synchroniser les données reçues sur chaque canal avec le signal d'horloge généré (50).

9. Procédé, tel que revendiqué dans la revendication 8, dans lequel le signal d'horloge (50) est retardé selon une quantité prédéterminée par rapport à une entrée d'horloge dérivée desdites données reçues.

10. Procédé, tel que revendiqué dans la revendication 9, dans lequel ladite quantité déterminée représente la moitié d'un retard maximal (Td) disponible pour chaque canal de données.

11. Procédé, tel que revendiqué dans l'une quelconque des revendications 8 à 10, dans lequel un retard variable sur chacun des canaux est incrémenté sur une plage de retards disponibles (0-Td), et dans lequel le retard est commandé de manière à revenir à son minimum dans le cas où le retard maximal est insuffisant pour obtenir la synchronisation, et vice versa.

EP 1 158 415 B1

Clock

Data[n:0]

*Fig. 1*

Clock

Data[n:0]

Ts Ts

*Fig. 2*

**Fig. 3**

Fig. 4A

Fig. 4B

Up

Down

−½UI

0

½UI

Data
Early

Data
Late

# Fig. 5

Data delay adjustment range

c ½Td ½Td Td

Up

Down

−½UI

0

½UI

# Fig.6

Data delay adjustment range

## Fig. 7

Data delay adjustment range

Potential false lock region

## Fig. 8

EP 1 158 415 B1

Data delay adjustment range

| 0 | ½Td | ½Td | Td |

Ts

Up

Down

−½UI

0

½UI

1UI

Potential
false lock
region

## *Fig. 9*

Fig.10

Data In

D0    D1    D2

Data Phase
Interpolator

Delayed Data Out

I0

I1

I2

Increasing
Delay

Data Phase Interpolator

D0    D̄0    D1    D̄1    D2    D̄2

I0    I1    I2

# Fig. 11